# EUROPÄISCHE PATENTANMELDUNG

(11) **EP 0 878 241 A2**
(43) Veröffentlichungstag der Anmeldung: **18.11.1998**
(21) Anmeldenummer: 98107177.2
(22) Anmeldetag: 20.04.1998
(51) Int. Cl.: B05B 15/04, B05B 15/12

(54) **Einrichtung zum Abscheiden von Überschusspulver, das bei der Pulverbeschichtung von Werkstücken anfällt**

(30) Priorität: 13.05.1997 DE 19720005
(71) Anmelder: WAGNER INTERNATIONAL AG, 9450 Altstätten (CH)
(72) Erfinder: Göbl, Otmar, 6844 Altach (AT); Adams, Horst, Dr., 88149 Nonnenhorn (DE)
(74) Vertreter: Liesegang, Roland, Dr.-Ing.

(57) **Zusammenfassung**

Eine Einrichtung zum Abscheiden von Überschußpulver, das bei der Pulverbeschichtung von Werkstücken anfällt und in einem Gas-/Pulverstrom abgesaugt wird, mit Pulveraustrag über einen unteren Sammler (12, 13, 14) und Reingasaustrag in einen oben liegenden Reingaskanal (7) über mindestens ein Tauchrohr (5), das vom Boden (6) des Reingaskanals (7) herabhängt und in ein Zyklonrohr (4) eintaucht, zeichnet sich dadurch aus, daß der abgesaugte Gas-/Pulverstrom axial in das Zyklonrohr (4) eingeleitet und über einen im Ringspalt (22) zwischen Tauchrohr (5) und Zyklonrohr (4) angeordneten Drallerzeuger (3) in kreisende Bewegung versetzt wird und daß der Boden (6) des Reingaskanals gegen das Zyklonrohr (4) aus der den Reingaskanal abdichtenden Betriebsstellung in eine Reinigungsstellung absenkbar ist.

## Beschreibung

Die Erfindung betrifft eine Einrichtung zum Abscheiden von Überschußpulver, das bei der Pulverbeschichtung von Werkstücken anfällt, mit den Merkmalen des Oberbegriffs des Anspruchs 1. Solche Einrichtungen sind aus der DE 32 29 756 A1, der DE 41 34 701 A1 und der EP 0 681 871 A2 bekannt.

Beim elektrostatischen Beschichten werden Werkstücke durch eine Pulverkabine gefördert und dabei mittels Sprühvorrichtungen mit Pulver beschichtet. Nicht alles Pulver gelangt auf die zu beschichtenden Werkstückoberflächen. Das Überschußpulver muß zur Ermöglichung eines Farbwechsels und zur Wiederverwendung oder Entsorgung aus der Pulverbeschichtungskabine schnell entfernt werden. Hierzu ist eine Einrichtung bekannt (EP 0 476 169 B1), bei welcher der aus der Pulverbeschichtungskabine abgesaugte Pulver-/Gasstrom tangential in ein Zyklonrohr eingesaugt wird, in welches ein in einem Bodenabschnitt des Reingaskanals hängendes Tauchrohr eintaucht. Dieser Bodenabschnitt ist bei einer Ausführung zusammen mit dem Tauchrohr in den Reingaskanal nach oben in einer Reinigungsstellung verfahrbar. Die Fläche kann dann mittels eines im Reingaskanal vorgesehenen Düsenrohres mit Reinigungsdüsen für Druckluft abgereinigt werden.

Der Erfindung liegt die Aufgabe zugrunde, eine Einrichtung der eingangs genannten Art zu schaffen, die einen schnellen Farbwechsel bei der Pulverbeschichtung ermöglicht.

Diese Aufgabe ist durch Patentanspruch 1 gelöst.

Vorteilhafte Ausgestaltungen der Erfindung sind in den Unteransprüchen angegeben.

Um eine Einrichtung nach der Erfindung in die Reinigungsstellung zu bringen, wird der Boden des Reingaskanals zusammen mit dem daran hängenden Tauchrohr abgesenkt. Das Tauchrohr fährt in das zugehörige Zyklonrohr ein und verringert dabei den Durchströmquerschnitt für das Reinigungsgas. Dadurch erhöht sich die Strömungsgeschwindigkeit im Zyklonrohr beträchtlich, was eventuell an den Wandflächen der Einrichtung anhaftendes Pulver abreißt und somit zu einer automatischen Reinigungswirkung ohne Vorsehen gesonderter Reinigungsdüsen führt.

Vorzugsweise ist eine Beruhigungskammer zwischen dem Boden des Reingaskanals und dem oberen Ende des Zyklonrohres angeordnet. Der abgesaugte Pulver-/Gasstrom wird über einen in die Wand der Beruhigungskammer mündenden Einlaßkanal in diese Beruhigungskammer eingespeist und von dort von oben in das Einlaßende des Zyklonrohres geleitet. Dann wird der Strom von einem Drallerzeuger, der vorzugsweise als Drallschaufelring ausgebildet ist, in kreisende Bewegung versetzt und anschließend um 180 Grad nach oben umgelenkt, wobei von Pulver befreites Reingas in das Ansaugende des Tauchrohres geleitet wird, während an der Innenwand des Zyklonrohrs abgeschiedene Pulverteilchen in den Sammler herabrieseln.

Die Erfindung ist in folgendem anhand schematischer Zeichnungen und Ausführungsbeispielen mit weiteren Einzelheiten näher erläutert. Es zeigen:
- Fig. 1a: einen Längsschnitt durch eine Einrichtung nach der Erfindung in Betriebsstellung;
- Fig. 1b: einen Querschnitt nach der Linie A-A in Figur 1a;
- Fig. 2: einen Längsschnitt durch eine Einrichtung nach der Erfindung in Reinigungsstellung.
- Fig. 3: einen Querschnitt nach der Linie B-B in Figur 1a.

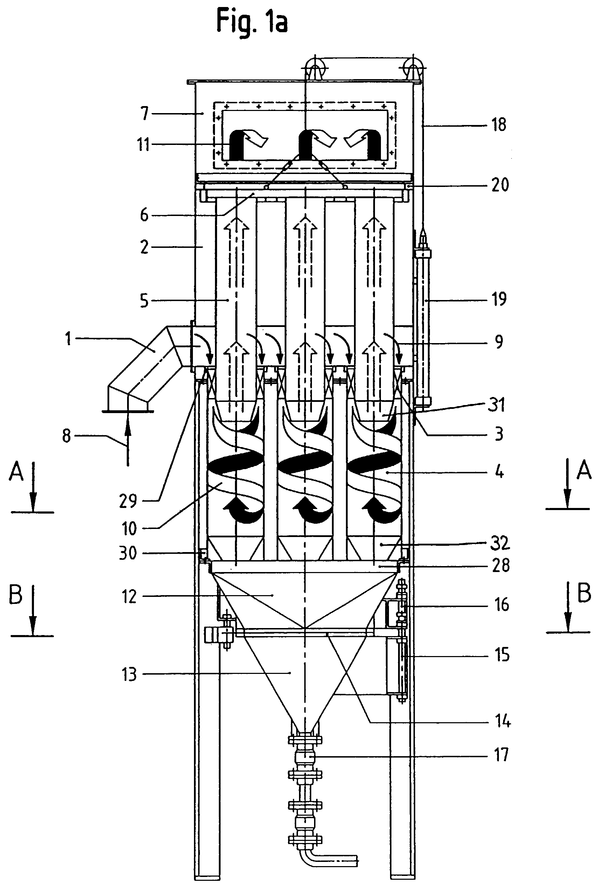

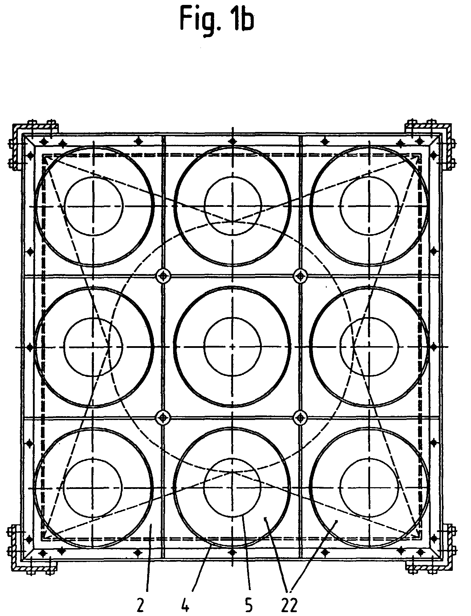

Die Figuren zeigen einen Multizyklon mit insgesamt neun Zyklonrohren. Zur Realisierung der Erfindung können jedoch auch mehr oder weniger Zyklonrohre, im Grenzfall nur ein einziges Zyklonrohr eingesetzt werden. Gemäß Fig. 1a strömt ein Pulver-Gasgemisch, - normalerweise dient Luft als Transportgas -, durch einen Einlaßkanal 1 in eine Beruhigungskammer 2 ein und strömt von dort über Drallschaufelringe 3 nach unten in die Zyklonrohre 4 ein. Die Drallschaufelringe sind auf den Außenumfängen von Tauchrohren fest angebracht, welche von dem Boden 6 eines Reingaskanals 7 herabhängen. Dieser Boden 6 bildet die Decke der Beruhigungskammer 2.

In Figur 1a sind die Strömungsrichtungen des einströmenden Pulver-/Luftgemisches 8 der Strömung 9 durch die Drallschaufelringe 3, die eigentliche Zyklonströmung 10 und die Strömung 11 im Reingaskanal 7 jeweils durch Pfeile markiert. Aus dem Reingaskanal wird die Luft dann in Richtung des Betrachters abgesaugt.

Das in den Zyklonrohren 4 durch die Fliehkraftwirkung abgeschiedene Pulver rieselt an den Wänden der Zyklonrohre nach unten, während die von Pulver gereinigte Luft durch die Tauchrohre 5 nach oben zum Reingaskanal 7 abgesaugt wird.

Unterhalb der Zyklonrohre 4 ist ein trichterförmiger Sammler mit einem feststehenden Teil 12 und einem herausschwenkbaren Teil 13 angeordnet. Zwischen den beiden Teilen 12, 13 befindet sich ein ebenfalls herausschwenkbares Sieb 14. Über einen Pneumatikzylinder 15 können der untere Teil 13 des Sammlers und das Sieb 14 abgesenkt werden und an einer gemeinsamen Drehachse 16 hängend getrennt voneinander ausgeschwenkt werden.

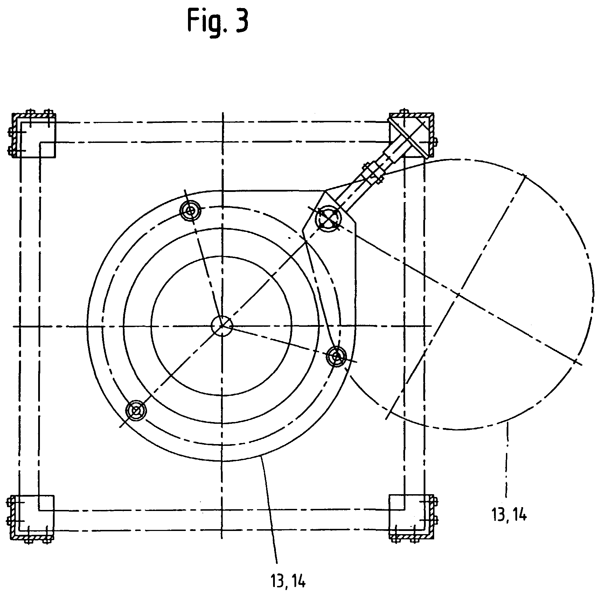

Figur 3 zeigt einen Schnitt durch den Multizyklon in Höhe des Siebes 14. Das Sieb dient dazu, das Pulver von eventuellen Fremdkörpern zu reinigen. Am unteren Ende des ausschwenkbaren Teils 13 befindet sich eine Fördereinrichtung 17, mit deren Hilfe das Pulver wieder einem nicht gezeigten Vorratsbehälter zur Versorgung von Sprühpistolen zugeführt wird.

Die Tauchrohre 5 bilden zusammen mit dem Boden 6 des Reingaskanals eine in vertikaler Richtung durch die Beruhigungskammer 2 bewegbare Einheit. Dadurch wird eine weitgehende automatische Innenreinigung des Zyklons ermöglicht.

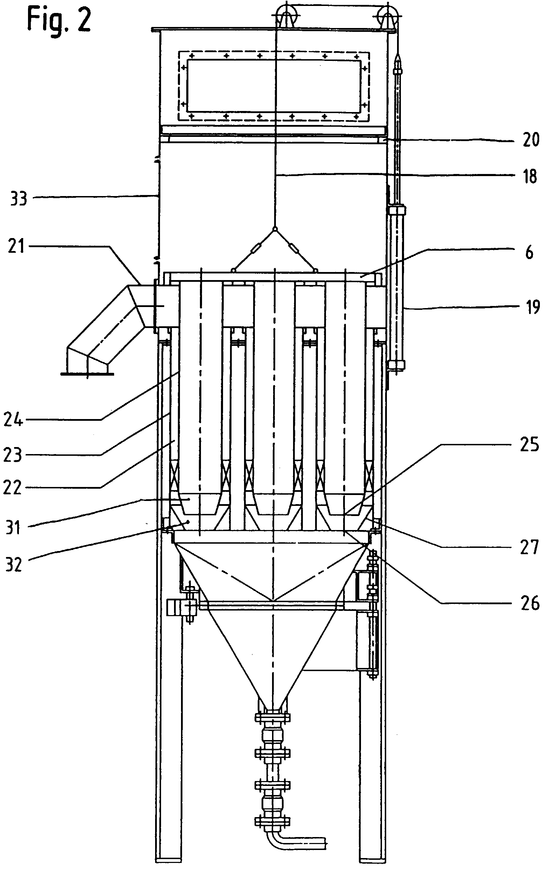

Hierzu ist der Boden 6 des Reingaskanals z.B über einen Seilzug 18 mit einem Pneumatikzylinder 19 verbunden. Es kann aber auch jede andere bekannte lineare Hubvorrichtung eingesetzt werden, z.B. eine Scherenhubvorrichtung, pneumatische oder hydraulische Teleskopvorrichtungen oder dergleichen. In der oberen Endposition wird mittels einer umlaufenden Dichtung 20 der Reingaskanal 7 pneumatisch gegenüber der Beruhigungskammer 2 abgedichtet. Beim Absenken des Bodens 6 des Reingaskanals fahren die an ihm befestigten Tauchrohre 5 nach unten in die Zyklonrohre 4 bis zu einer Endposition ein, die in Figur 2 dargestellt ist. In dieser Endposition liegt der Boden des Reingaskanals auf der Höhe der oberen Kante 21 des Zuluftkanals.

Durch das Absenken der Tauchrohre 5 in die Zyklonrohre 4 verändert sich die axiale Länge der zwischen den Tauchrohren 5 und den Zyklonrohren 4 herrschenden Ringspalte 22. Da dadurch der offene Querschnitt für die Luftströmung innerhalb der Zyklonrohre stark verringert wird, erhöht sich die Strömungsgeschwindigkeit im Zyklonrohr beträchtlich. Dies bewirkt, daß eventuell an den Zyklonrohrinnenwänden 23 oder an den Tauchrohraußenwänden 24 anhaftendes Pulver vom Luftstrom weggerissen wird, so daß diese Flächen automatisch abgereingigt werden. Zudem befindet sich in dieser Reinigungsposition die Ansaugöffnung 25 am unteren Ende einer konischen Verengung 31 des Tauchrohres direkt oberhalb der Apexöffnung 26 am unteren Ende einer konischen Verengung 32 des Zyklonrohres, so daß eventuell auf den schrägen Flächen 27 der Verengung 32 aufliegendes Pulver abgesaugt wird.

In hartnäckigen Fällen können zusätzlich der untere Teil 13 des Sammlers und das Sieb 14 abgesenkt werden, so daß die Verengung 32 der Zyklonrohre 4 von außen zugänglich werden und mit einer Druckluftpistole bei laufender Absaugung freigeblasen werden können. Dabei wird das mit der Druckluftpistole abgeblasene Pulver sofort wegen der hohen Strömungsgeschwindigkeit über die Tauchrohre 5 abgesaugt. Da die Drallschaufelringe 3 mit den Tauchrohren 5 ebenfalls abgesenkt wurden, sind sie in Reinigungsstellung auf gleiche Weise von unten zugänglich und mit Hilfe einer Druckluftpistole zusätzlich abreinigbar.

Sobald der Absenkvorgang einsetzt, wird die Dichtung 20 zwischen oberem Anschlag und Boden 6 des Reingaskanals 7 geöffnet, so daß ein Luftspalt zwischen der Innenwand des Reingaskanals und dem absinkenden Boden entsteht, durch den Luft mit hoher Geschwindigkeit nach oben gesaugt wird. Da dieser Luftspalt während des Absenkvorgangs die gesamte Wandinnenfläche der Beruhigungskammer 2 überstreicht, wird auf diese Weise die Beruhigungskammer ebenfalls automatisch abgereinigt.

In einer besonders vorteilhaften Ausführung der Erfindung sind die Tauchrohre 5 im abgesenkten Zustand des Bodens 6 des Reingaskanals 7 nach oben aus diesem Boden herausziehbar und damit einzeln austauschbar. Im Wandbereich der Beruhigungskammer 2 zwischen der Dichtung 20 und dem Einlaßkanal 1 ist hierzu eine in Fig. 2 bei 33 angedeutete Wartungstür vorgesehen, über welche die Tauchrohre aus dem Zyklongehäuse entfernbar sind.

Gemäß einer weiteren vorteilhaften Ausgestaltung sind die Zyklonrohre 4 am unteren Ende in einer gemeinsamen Halteplatte 28 (Fig. 1a) gelagert und werden von dieser nach oben gegen ein Gegenlager 29 gedrückt. Die untere Halteplatte 28 ist in ihrer Verankerung soweit senkbar, daß die Zyklonrohre 4 von dem oberen Gegenlager 29 freikommen und dann praktisch frei auf der unteren Halteplatte 28 stehen. Die Zyklonrohre 4 können dann einzeln seitlich herausgenommen und damit bei Bedarf (z.B bei Auftreten von Ansinterungen) ausgewechselt werden.

Die Tauchrohre 5 und/oder Zyklonrohre 4 und/oder Drallschaufelringe 3 sind aus vorzugsweise recycelbarem und kostengünstigem Kunststoff hergestellt, so daß bei Ansinterungen keine aufwendige Reinigung erfolgen muß, sondern das betroffene Rohr (bzw. der Drallschaufelring) einzeln ausgetauscht und entsorgt, bzw. einer Wiederverwendung zugeführt werden können.

## Patentansprüche

1. Einrichtung zum Abscheiden von Überschußpulver, das bei der Pulverbeschichtung von Werkstücken anfällt und in einem Gas-/Pulverstrom abgesaugt wird, mit Pulveraustrag über einen unteren Sammler (12, 13, 14) und Reingasaustrag in einen oben liegenden Reingaskanal (7) über mindestens ein Tauchrohr (5), das vom Boden (6) des Reingaskanals (7) herabhängt und in ein Zyklonrohr (4) eintaucht, wobei der abgesaugte Gas/Pulverstrom axial in das Zyklonrohr (4) einleitbar und über einen im Ringspalt (22) zwischen Tauchrohr (5) und Zyklonrohr (4) angeordneten Drallerzeuger (3) in kreisende Bewegung versetzbar ist, dadurch **gekennzeichnet**, daß der Boden (6) des Reingaskanals gegen das Zyklonrohr (4) aus der den Reingaskanal abdichtenden Betriebsstellung in eine Reinigungsstellung absenkbar ist.

2. Einrichtung nach Anspruch 1, dadurch **gekennzeichnet**, daß der Boden (6) des Reingaskanals (7) die Decke einer bis zu dem oberen Ende des Zyklonrohres (4) reichenden Beruhigungskammer (2) bildet, in deren Wand ein Einlaßkanal (1) für den Gas/Pulverstrom mündet.

3. Einrichtung nach Anspruch 1 oder 2, dadurch **gekennzeichnet**, daß das Zyklonrohr am unteren, in den Sammler (12, 13) mündenden Ende eine Verengung (32) aufweist.

4. Einrichtung nach Anspruch 3, dadurch **gekennzeichnet**, daß das Tauchrohr (5) am unteren Ende eine Ansaugöffnung (25) aufweist, welche im abgesenkten Zustand in die Verengung (32) des Zyklonrohrs (4) hineinreicht.

5. Einrichtung nach einem der Ansprüche 1 bis 4, dadurch **gekennzeichnet**, daß der Sammler (12, 13, 14) trichterförmig ausgebildet ist und einen oberen feststehenden Teil (12) sowie einen unteren herausschwenkbaren Teil (13) aufweist.

6. Einrichtung nach Anspruch 5, dadurch **gekennzeichnet**, daß ein Sieb (14) zu dem herausschwenkbaren Teil (13) gehört.

7. Einrichtung nach einem der Ansprüche 1 bis 6, dadurch **gekennzeichnet**, daß der Boden (6) des Reingaskanals mittels einer Hubvorrichtung (18, 19) in die Reinigungsstellung absenkbar ist.

8. Einrichtung nach Anspruch 7, dadurch **gekennzeichnet**, daß die Hubvorrichtung (18, 19) einen durch einen Antrieb (19) betätigbaren Seilzug (18) aufweist.

9. Einrichtung nach einem der Ansprüche 1 bis 8, dadurch **gekennzeichnet**, daß der Drallerzeuger (3) ein Drallschaufelring ist, der am Außenumfang des Tauchrohres (5) befestigt ist.

10. Einrichtung nach einem der Ansprüche 1 bis 9, dadurch **gekennzeichnet**, daß mehrere Tauchrohre (5) vom Boden (6) herabhängen und in entsprechende, an einer Halteplatte (28) am Kopf des Sammlers (12, 13) abgestützte Zyklonrohre (4) eintauchen.

11. Einrichtung nach einem der Ansprüche 1 bis 10, dadurch **gekennzeichnet**, daß das Tauchrohr (5) auswechselbar am Boden (6) aufgehängt ist.

12. Einrichtung nach Anspruch 10, dadurch **gekennzeichnet**, daß das Zyklonrohr (4) auswechselbar an der Halteplatte (28) abgestützt ist.

13. Einrichtung nach einem der Ansprüche 1 bis 12, dadurch **gekennzeichnet**, daß das Tauchrohr (5) und/oder das Zyklonrohr (4) und/oder der Drallerzeuger (3) aus insbesondere wiederverwendbarem Kunststoff bestehen.
